# EUROPEAN PATENT SPECIFICATION

(11) **EP 1 264 357 B1**
(45) Date of publication and mention of the grant of the patent: **14.07.2004**
(21) Application number: 01912596.2
(22) Date of filing: 05.03.2001
(51) Int. Cl.: H01M 6/42, H01M 2/10, H01M 2/02

(54) **BATTERY COMPRISING A PLURALITY OF SERIES-CONNECTED GALVANIC CELLS**
MEHRERE IN REIHE GESCHALTETEN GALVANISCHE ZELLEN UMFASSENDE BATTERIE
BATTERIE COMPRENANT UNE PLURALITE DE CELLULES GALVANIQUES RELIEES EN SERIE

(30) Priority: 09.03.2000 NL 1014590
(43) Date of publication of application: 11.12.2002
(73) Proprietor: Corus Staal BV, 1970 CA Ijmuiden (NL)
(72) Inventor: GOOTZEN, Jozef, Franciscus, Elisabeth, NL-5663 TG Geldrop (NL); VAN HAASTRECHT, Gijsbertus, Cornelis, NL-1969 KT Heemskerk (NL)
(74) Representative: Kruit, J., Ir.
(86) International application number: PCT/NL2001/000184
(87) International publication number: WO 2001/067529

(56) References cited:
- WO-A-94/19835
- DE-A- 3 917 821
- GB-A- 2 133 922
- US-A- 3 669 748
- PATENT ABSTRACTS OF JAPAN vol. 010, no. 236 (E-428), 15 August 1986 (1986-08-15) & JP 61 068868 A (HITACHI LTD;OTHERS: 01), 9 April 1986 (1986-04-09)
- PATENT ABSTRACTS OF JAPAN vol. 1998, no. 03, 27 February 1998 (1998-02-27) & JP 09 306440 A (MATSUSHITA ELECTRIC IND CO LTD;FUJI SEAL CO LTD), 28 November 1997 (1997-11-28)

## Description

The invention relates to a battery comprising a plurality of series-connected galvanic cells, a metal casing and at least one layer of electrically insulating material between the cells and the casing. Batteries of this type are generally known, for example in the form of 9-volt batteries, in which six series-connected cells are accommodated. Cells of this type may be stacked inside the battery or may be positioned next to one another as upright rod-shaped cells. In general, in these batteries the stacked cells are of the zinc-carbon type.

It is customary to provide these batteries in the form of a block of rectangular cross section. At one end, a sheet of insulating material then bears two terminals. In the case of the stacked battery, the different terminals of successive cells are in metallic contact with one another, the top terminal of the top cell being connected to the positive terminal of the battery and the bottom terminal of the bottom cell being connected, by an electrical connection, to the negative terminal of the battery. The latter connection is often packaged in a cardboard structure.

The stacked cells can be formed into a unit in various ways. For example, they may be cast in a resin or may be pushed into a plastic sleeve.

Since the circumference of each of the stacked cells is under a different voltage, it is important for the circumference of these cells not to come into electrical contact with the metal casing. Therefore, for this reason the stacked cells are generally packaged in an additional plastic film, which may consist of a so-called shrink film.

In case the battery consists of rod-shaped cells which are arranged next to one another, these cells are generally arranged with the terminals in different directions. As a result, these cells can easily be connected in series, the first and the last cell being connected to the terminals of the battery. In this case too, the casings of the cells are at a different voltage, with the result that these cells have to be electrically insulated both from one another and also, in particular, from the metal casing. For this reason, the assembly of these cells is also surrounded by a heavy plastic film, for example in the form of a shrink film.

The Patent Abstracts of Japan, vol. 010, no. 236 (E-428) of 15 August 1986, abstract of JP 61 068868 A, shows a single sheet-shaped battery. No separate cell or cells are present. The battery parts (electrodes, electrolyte et cetera) are enclosed in an aluminium casing which is coated on both sides with polyethylene.

The shrink film in a battery comprising a plurality of series-connected galvanic cells has proven to be an expensive element of the construction, since incorporation of the special shrink properties requires additional expensive process operations. Fitting of the shrink film is also labour-intensive. Furthermore, this film takes up additional space within the battery, which space is to the detriment of the dimensions of the cells.

According to the invention, the metal casing, on the inner side, comprises an organic coating layer of the film type which serves as the layer of electrically insulating material. As a result, this organic coating layer is able to replace the plastic shrink film, thus allowing the costs of this shrink film and its fitting to be saved. The term coating layer of the film type is understood as meaning polymer films which are arranged on the metal by lamination but also polymer films which are formed on the metal surface by extrusion. The use of a coating layer of the film type has the advantage that this layer, together with the metal casing, is readily deformable, for example via deep drawing or wall ironing. Also, it has been found according to the invention that an organic coating layer on the metal casing which has the same effect as a shrink film can be considerably thinner than the latter, thus saving additional space in the battery, which space can be used for the benefit of the dimensions of the cells. It should be noted that the metal casing does not fulfil any electrical function in the galvanic process within the battery.

According to the invention, the metal casing may also be provided with an organic coating layer on the outer side, which coating layer is printable or may even have been printed on in advance. In this case, unlike the known metal casing, this involves the use of a metal plate, for example a steel plate, which has been coated on two sides, the coating layer on the inner side of the metal casing having the function of providing electrical insulation with respect to the cells, and the outer side having the function of being printable and possibly also of protecting the metal plate itself.

The invention also relates to the novel battery, the metal casing comprising a wrapper with a longitudinal seam, which wrapper is curled inwards at the ends of the battery, the curled edges formed completely enclosing the components of the battery to form a cohesive unit. In this case, it is particularly advantageous if the organic coating layer on the inner side of the wrapper comprises a thermoplastic which, at the location of the longitudinal seam, has been temporarily heated so that the edges of the seam adhere to one another.

The organic coating layer can be applied to the wrapper immediately before it is fitted during production of the battery. However, it has been found that it is preferable to produce the wrapper from a metal plate which has been provided with an organic coating layer.

An alternative construction of the battery according to the present invention furthermore consists in the metal casing not comprising a wrapper with a longitudinal seam, but rather comprising a shaped can which is made from a metal plate which has been precoated with an organic coating layer. In the context of the present invention, the term shaped can is understood as meaning a can which is produced by deep drawing and/or wall ironing. This construction offers the advantage that the can which is formed can be used as a current-carrying element. If the battery is also of the type in which the connected cells arc stacked. the bottom of the can may be electrically connected to the underside of the bottom cell, and the upper edge of the can is electrically connected to one of the terminals of the battery. As a rule this will then be the negative terminal. The connection between the top side of the cell stack and the positive terminal is then brought about in a customary way. By using the sleeve as a current-carrying element, it is not necessary to provide a separate electrical connection through the battery between the base of the bottom cell and the negative terminal of the battery. Moreover, in this battery design, a separate, loose baseplate is rendered superfluous. Both measures lead to simplification of the assembly process of the battery, resulting in a clear cost saving.

The invention will now be explained with reference to a number of figures.
Fig. 1 diagrammatically depicts a 9-volt battery of a known type.
Fig. 2 shows an improvement to this battery according to the invention.
Fig. 3 shows another embodiment of the improvement according to the invention.

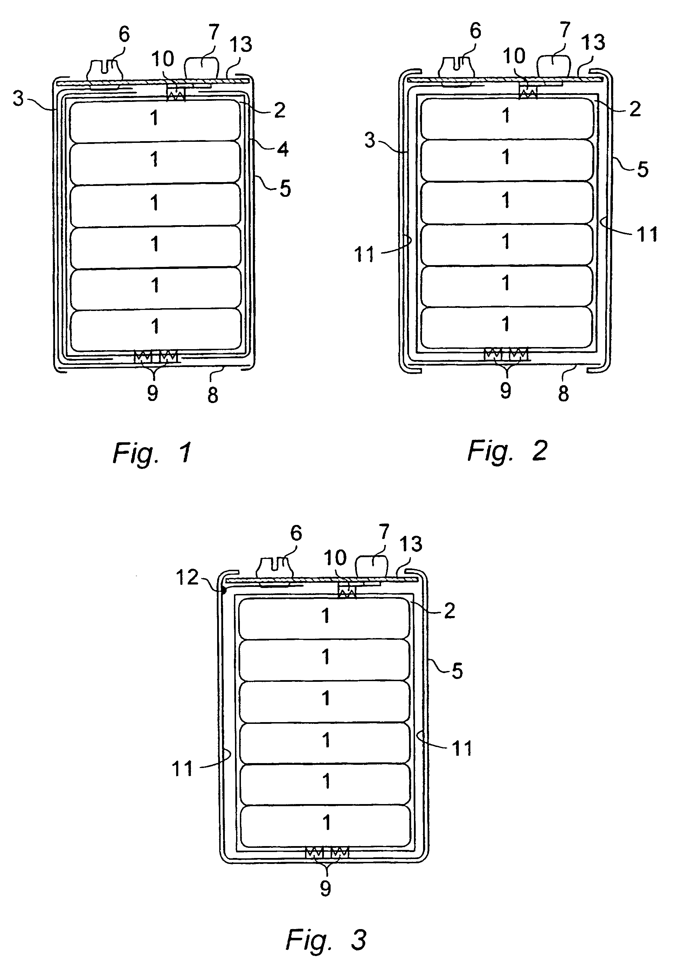

Fig. 1 diagrammatically depicts a 9-volt battery of the zinc-carbon type. Six stacked galvanic cells which are connected in series are denoted by reference numerals 1. Each of these cells has a voltage of 1.5 volts. The six cells are cast together in a synthetic resin to form a block 2. The block 2 is surrounded by a heavy shrink film 4 which electrically insulates the cells 1 from a metal casing 5. The metal casing 5 consists of a wrapper which is closed by means of a longitudinal seam (not shown). At the top and bottom ends of the battery, the metal casing is curled inwards, with the result that a baseplate 8 and a top plate 13 are enclosed. A positive terminal 7 and a negative terminal 6 are secured in the top plate 13. In this case, the positive terminal 7 is connected to the positive terminal of the top cell 1 by means of a sharply serrated element 10 which punches plastic layer 2. In a corresponding way, one or more sharply serrated elements 9, which are in electrical contact with the negative terminal of the bottom galvanic cell I, are situated on the baseplate 8. These elements 9 are connected to the negative terminal 6 by means of a cardboard-packaged metal strip 3.

The plastic shrink film is of a type which is known per se. A plastic shrink film of this type is relatively expensive and fitting it around the block 2 is labour-intensive. Moreover, this plastic shrink film takes up additional space inside the battery.

In the embodiment according to the invention as shown in Fig. 2, these drawbacks are avoided. The metal casing 5, which in this case too is a wrapper, is produced from a metal plate which on the inner side of the wrapper which is to be formed is provided with an organic coating layer 11 in film form. This layer takes over the function of the plastic shrink film, with the result that this shrink film can be omitted. The additional space inside the wrapper which is made available as a result can be utilized by making the cells 1 of slightly larger design, thus also increasing the capacity of the battery. It should be noted that in Fig. 2 many of the reference numerals refer to elements corresponding to those shown in Fig. 1.

It will be clear that the metal plate with the coating layer 11 on the inner side of the wrapper formed may also previously have been provided with an organic coating layer on the outer side of the wrapper. A coating layer of this type is not shown in Fig. 2. A layer of this type is preferably selected from the type which is printable. If appropriate, this layer may already have been printed on before a wrapper is formed from it.

Fig. 3 shows an embodiment of the novel battery in which the metal casing comprises a shaped steel can which is made from a steel plate which has been precoated with an organic coating layer. In this case, can 5 bears an organic coating layer, which consists of electrically insulating material, on the inner side. If desired, in this case too the outer side of the can 5 may once again be coated with a pre-printed or printable plastic layer.

In this embodiment, the bottom of the can 5 replaces the baseplate 8. The serrated elements 9 arc attached directly to the base of the metal can, while the negative terminal 6 is also in electrical contact with the wall of can 5 by means of a soldered joint 12. As a result, the can wall has become a current-conducting element between the negative terminal of the bottom cell 1 and the negative terminal of the entire battery. As a result, the cardboard-packaged metal strip 3 from Figs. 1 and 2 has been made superfluous.

It will be clear that the novel constructions according to the present invention can also be applied to batteries in which series-connected galvanic cells are not stacked but rather comprise rod cells arranged next to one another.

## Claims

1. Battery comprising a plurality of series-connected galvanic cells, a metal casing and at least one layer of electrically insulating material between the cells and the casing, **characterized in that** the metal casing, on the inner side, comprises an organic coating layer of the film type which serves as the layer of electrically insulating material.

2. Battery according to Claim 1, **characterized in that** the metal casing is also provided with an organic coating layer on the outer side, which coating layer is printable or is printed on.

3. Battery according to Claim 1 or 2, **characterized in that** the metal casing consists of a wrapper with a longitudinal seam, which wrapper is curled inwards at the ends of the battery, the curled edges formed completely enclosing the components of the battery to form a cohesive unit.

4. Battery according to Claim 3, **characterized in that** the organic coating layer on the inner side of the wrapper comprises a thermoplastic which, at the location of the longitudinal seam, has been temporarily heated so that the edges of the seam adhere to one another.

5. Battery according to Claim 3 or 4, **characterized in that** the wrapper is produced from a metal plate provided with an organic coating layer.

6. Battery according to Claim 1 or 2, **characterized in that** the metal casing consists of a shaped can made from a metal plate which has been precoated with an organic coating layer.

7. Battery according to Claim 6, also of the type in which the connected cells are stacked, **characterized in that** the base of the can is electrically connected to the underside of the bottom cell, and the upper edge of the can is electrically connected to one of the terminals of the battery.

## Patentansprüche

1. Batterie mit mehreren in Reihe geschalteten galvanischen Zellen, einem Metallgehäuse und wenigstens einer Schicht aus elektrisch isolierendem Material zwischen den Zellen und dem Gehäuse, **dadurch gekennzeichnet, daß** das Metallgehäuse an der Innenseite eine organische Beschichtungslage des Folientyps aufweist, welche als die Schicht aus elektrisch isolierendem Material dient.

2. Batterie nach Anspruch 1, **dadurch gekennzeichnet, daß** das Metallgehäuse auch mit einer Beschichtungslage an der Außenseite versehen ist, die bedruckbar oder bedruckt ist.

3. Batterie nach Anspruch 1 oder 2, **dadurch gekennzeichnet, daß** das Metallgehäuse aus einer Hülle mit einer Längsnaht besteht, welche an den Enden der Batterie nach innen eingerollt ist, wobei die gebildeten eingerollten Kanten vollständig die Komponenten der Batterie umschließen, um eine zusammenhängende Einheit zu bilden.

4. Batterie nach Anspruch 3, **dadurch gekennzeichnet, daß** die organische Beschichtungslage an der Innenseite der Hülle einen Thermoplast aufweist, der an der Stelle der Längsnaht zeitweilig erwärmt wurde, so daß die Kanten der Naht aneinander haften.

5. Batterie nach Anspruch 3 oder 4, **dadurch gekennzeichnet, daß** die Hülle aus einer Metallplatte hergestellt ist, die mit einer organischen Beschichtungslage versehen ist.

6. Batterie nach Anspruch 1 oder 2, **dadurch gekennzeichnet, daß** das Metallgehäuse aus einem geformten Becher besteht, der aus einer Metallplatte hergestellt ist, die mit einer organischen Beschichtungslage vorbeschichtet wurde.

7. Batterie nach Anspruch 6, auch von dem Typ, bei welchem die verbundenen Zellen gestapelt sind, **dadurch gekennzeichnet, daß** die Basis des Bechers mit der Unterseite der Bodenzelle elektrisch verbunden ist und die obere Kante des Bechers mit einer der Klemmen der Batterie elektrisch verbunden ist.

## Revendications

1. Batterie comprenant une pluralité de piles galvaniques installées en série, un boîtier métallique et au moins une couche de matériau électriquement isolant entre les piles et le boîtier, **caractérisée en ce que** le boîtier métallique comporte sur la face intérieure une couche de revêtement organique du type pelliculaire qui sert de couche de matériau électriquement isolant.

2. Batterie selon la revendication 1, **caractérisée en ce que** le boîtier métallique est également pourvu d'une couche de revêtement organique sur la face extérieure, laquelle couche de revêtement est imprimable ou est imprimée.

3. Batterie selon la revendication 1 ou 2, **caractérisée en ce que** le boîtier métallique est constitué par une enveloppe à joint longitudinal, laquelle enveloppe est rabattue vers l'intérieur aux extrémités de la batterie, les bords rabattus formés enfermant complètement les éléments constitutifs de la batterie pour former un ensemble cohérent.

4. Batterie selon la revendication 3, **caractérisée en ce que** la couche de revêtement organique de la face interne de l'enveloppe comporte une matière thermoplastique qui, à l'emplacement du joint longitudinal, a été temporairement chauffée de façon que les bords du joint adhèrent l'un à l'autre.

5. Batterie selon la revendication 3 ou 4, **caractérisée en ce que** l'enveloppe métallique est constituée par une boîte profilée en tôle métallique qui a été pré-revêtue d'une couche de revêtement organique.

6. Batterie selon la revendication 1 ou 2, **caractérisée en ce que** le boîtier métallique est constitué par une boîte profilée en tôle métallique qui a été préalablement revêtue d'une couche de revêtement organique.

7. Batterie selon la revendication 6, également du type dans lequel les piles connectées sont empilées, **caractérisée en ce que** la base de la boîte est électriquement connectée à la face inférieure de la pile du dessous et le bord supérieur de la boîte est électriquement connecté à l'une des bornes de la batterie.
